(19) Europäisches Patentamt
European Patent Office
Office européen des brevets

(11) Publication number: **0 110 049**
**B1**

(12) **EUROPEAN PATENT SPECIFICATION**

(45) Date of publication of patent specification: **11.11.87**

(51) Int. Cl.$^4$: **A 23 L 1/226**, A 23 L 1/30

(21) Application number: **83109558.3**

(22) Date of filing: **26.09.83**

(54) **Mixed seasoning.**

(30) Priority: **30.11.82 US 445766**
**23.06.83 US 507289**

(43) Date of publication of application:
**13.06.84 Bulletin 84/24**

(45) Publication of the grant of the patent:
**11.11.87 Bulletin 87/46**

(84) Designated Contracting States:
**CH DE FR GB LI NL**

(56) References cited:
**EP-A-0 040 654**
**DE-A-2 820 579**
**DE-B-1 229 372**
**FR-A- 827 258**
**FR-A-1 441 757**
**FR-A-2 385 339**
**FR-A-2 425 421**
**GB-A-1 252 781**
**GB-A-2 015 863**
**US-A-4 107 346**

(73) Proprietor: **INTERNATIONAL FLAVORS & FRAGRANCES INC.**
**521 West 57th Street**
**New York New York 10019 (US)**

(72) Inventor: **Buckholz, Lawrence, Jr.**
**11 Indiana Avenue**
**Jackson New Jersey 08527 (US)**
Inventor: **Wilson, Richard A.**
**753 Oak Avenue**
**Westfield New Jersey 07090 (US)**
Inventor: **Kleinberg, Roger**
**8 Colorado Drive**
**Jackson New Jersey 08527 (US)**

(74) Representative: **Brown, John David et al**
**FORRESTER & BOEHMERT**
**Widenmayerstrasse 4/I**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 110 049 B1

**Description**

The present invention relates to a mixed or combination seasoning as a flavoring agent to be used alone or in combination with other flavorings. More particularly, the present invention is concerned with a mixed seasoning, the use of which gives rise to the augmenting or enhancing of the aroma or taste of foodstuffs including dairy flavored foodstuffs, animal foodstuffs and savory flavored foodstuffs. More particularly, the foodstuffs and animal foods the aroma and tastes of which are augmented or enhanced are:

(A) *Dairy*
- (1) processed cheese;
- (2) cheese spreads;
- (3) cheese dips;
- (4) cheese analogues; and
- (5) imitation cheese analogues

(B) *Animal Foods*
- (1) dog food; and
- (2) cat food

(C) *Savory*
- (1) extruded snacks;
- (2) crackers, pretzels, potato chips and the like;
- (3) meat sauces, white sauces and gravies;
- (4) casseroles;
- (5) cheese sauces;
- (6) soups (instant and finished);
- (7) prepared meats and meat spreads;
- (8) meat and poultry analogues, extenders and the like;
- (9) margarine;
- (10) salad dressings;
- (11) condiments;
- (12) seasonings and flavorings;
- (13) meat and poultry (processed); and
- (14) breading and stuffing.

For example, in meat flavored foodstuffs, the red meat "bloody" notes are enhanced. As a further example, in cheese flavors and cheese flavored foodstuffs, the "sophisticated Roquefort" nuances are augmented or enhanced.

More specifically, this invention relates to the use in augmenting or enhancing the aroma or taste of meat flavored, cheese flavored and savory flavored foodstuffs, animal foods and snacks of a composition of matter consisting essentially of:

(a) from about 0.25 up to about 0.80 mole percent (herein and hereinafter to be understood as meaning a percentage based on total moles of cations, anions and substantially non-ionized organic acids) on a dry basis of a lactic acid/lactate species mixture having the structures:

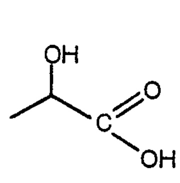

or

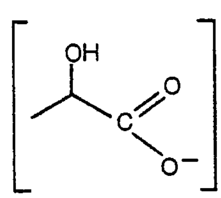

(b) from 0 up to about 0.09 mole percent on a dry basis of glycollic acid/glycollic ion species mixture having the structure:

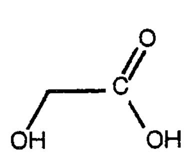

or

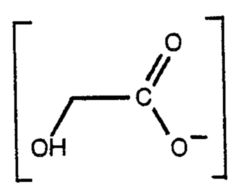

(c) from 0 up to about 10.0 mole percent on a dry basis of magnesium ion;

(d) from about 6 mole percent up to about 50 mole percent on a dry basis of a phosphate/monoacid phosphate/diacid phosphate/phosphoric acid species mixture having the formula:

$[PO_4^{\equiv}]$ or $[HPO_4^{=}]$ or $[H_2PO_4^{-}]$ or $H_3PO_4$

taken alone or taken further together with at least one of the species tripolyphosphate, pyrophosphate and/or polymetaphosphate (e.g., $K_5P_3O_{10}$; $K_4P_2O_7$; $[KPO_3]_x$ respectively, wherein x represents a repeating number of monomeric units to form a polymer);

(e) from 0 mole percent up to about 40 mole percent on a dry basis of sodium ion;

(f) from about 8 mole percent up to about 50 mole percent on dry basis of potassium ion;

(g) from about 0.3 mole percent up to about 16 mole percent on a dry basis of chloride ion;

(h) from 0 mole percent up to 30 mole percent on a dry basis of carbonate/bicarbonate/carbonic acid species mixture having the formula:

$[CO_3^{=}]$ or $[HCO_3^{-}]$ or $H_2CO_3$

(j) from 0 mole percent up to about 2.0 mole percent on a dry basis of monobasic glutamate/dibasic glutamate/glutamic acid species mixture having the formula:

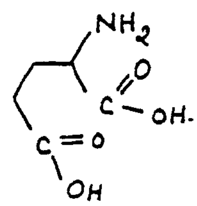 or 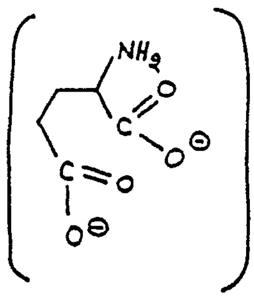 or 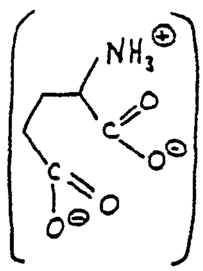 or 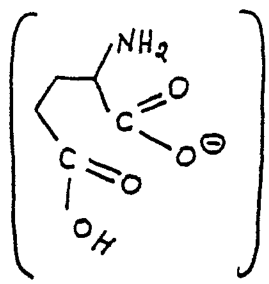 or

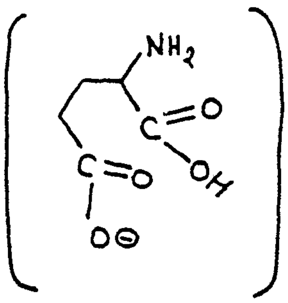 or 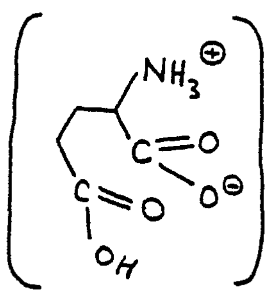 or 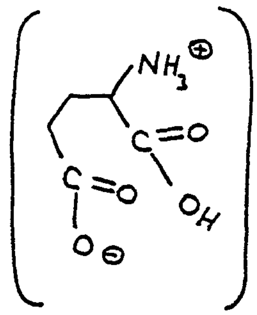 or 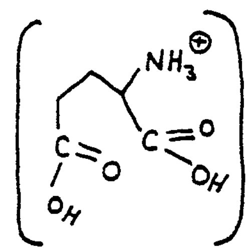

(k) from 0 up to about 0.6 mole percent on a dry basis of calcium ion;
with the proviso that the sum total of mole percent on a dry basis of sodium ion, potassium ion, magnesium ion and calcium ion is from about 48 mole percent up to about 60 mole percent; and with the proviso that the sum total of carbonate/bicarbonate/carbonic acid ion species mixture having the formula:

$[CO_3^{=}]$ or $[HCO_3^{-}]$ or $H_2CO_3$

taken together with the sum total mole percent on a dry basis of the phosphate/monobasic phosphate/dibasic phosphate species mixture having the formula:

$[PO_4^{\equiv}]$ or $[HPO_4^{=}]$ or $[H_2PO_4^{-}]$ or $H_3PO_4$

taken alone or taken further together with the species tripolyphosphate, pyrophosphate and/or polymetaphosphate is from about 35 mole percent up to about 50 mole percent.

The foregoing composition when in aqueous solution (e.g. a soup such as a chicken soup or clam chowder) has a pH in the range of from about 6 up to about 10.

In said aqueous solution, the concentrations of ion and acid species are:

(a) from about $2 \times 10^{-4}$ up to about $7 \times 10^{-4}$ moles per liter of the lactic acid/lactate ion species defined according to the structures:

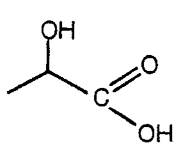 or 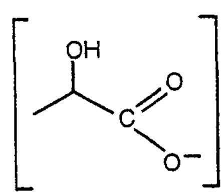

(b) from 0 up to about 9 × $10^{-5}$ moles per liter of the species glycollic acid/glycollate ion defined according to the structures:

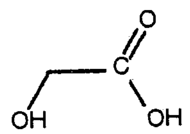

or

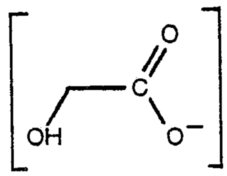

(c) from 0 moles per liter up to about 1.5 × $10^{-3}$ moles per liter of the ion/acid species, glutamic acid/monobasic glutamate/dibasic glutamate defined according to the structures:

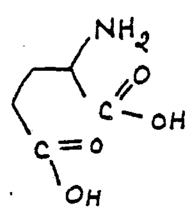

or

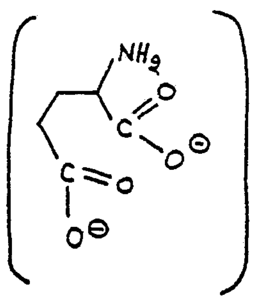

or

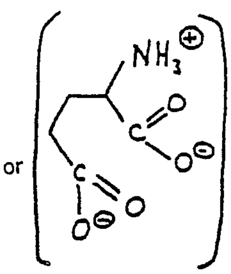

or

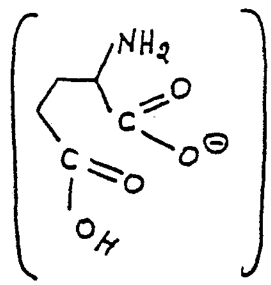

or

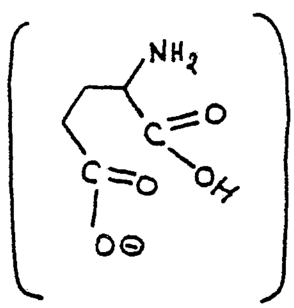

or

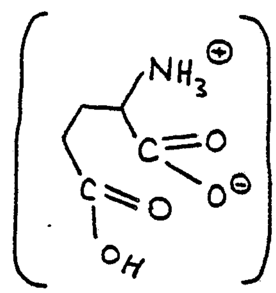

or

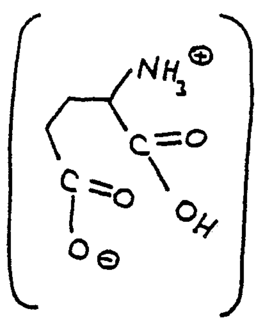

or

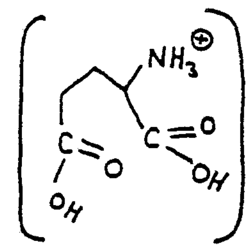

(d) from about 3 × $10^{-4}$ up to about 1.6 × $10^{-2}$ moles per liter of the chloride ion species;

(e) from about 3 × $10^{-3}$ up to about 1 × $10^{-1}$ moles per liter of the acid/ion species, phosphoric acid/monoacid phosphate/diacid phosphate/phosphate having the formula:

$$[PO_4^{\equiv}] \text{ or } [HPO_4^{=}] \text{ or } [H_2PO_4^{-}] \text{ or } H_3PO_4$$

taken alone or taken further together with the species tripolyphosphate (e.g. $K_5P_3O_{10}$); pyrophosphate (e.g. $K_4P_2O_7$); and/or polymetaphosphate (e.g. $[KPO_3]_x$ wherein x represents a repeating number of monomeric units to form a polymer);

(f) from 0 up to about 2 × $10^{-3}$ moles per liter of the ion/acid species carbonate/bicarbonate/carbonic acid having the formula:

$$[CO_3^{=}] \text{ or } [HCO_3^{-}] \text{ or } H_2CO_3$$

(g) from 0 up to about 4 × $10^{-2}$ moles per liter of the sodium ion species;

(h) from about 4 × $10^{-3}$ up to about 9 × $10^{-2}$ moles per liter of the potassium ion species;

(j) from about 0 up to about 1 × $10^{-2}$ moles per liter of the magnesium ion species;

(k) from about 0 up to about 6 × $10^{-4}$ of the calcium ion species;

with the provisos:

(i) that the mole ratio of metal cation:total acid and ion is from about 0.4 up to about 0.7;

(ii) that the concentration of ions and acids is from about 0.04 up to about 0.25 moles per liter; and

(iii) that the range of concentration of metal cations is from about 0.02 up to about 0.15 moles per liter.

Preferably, the composition of matter of our invention is limited to a mixture of:

(i) from about 60 weight percent up to about 96 weight percent on a dry basis of a substance selected from the group consisting of (a) $KH_2PO_4$ or (b) $K_2HPO_4$ or (c) a mixture of $Mg_3(PO_4)_2.4H_2O$ and $K_2CO_3$;

(ii) from about 0.4 up to about 3.5 weight percent on a dry basis of lactic acid;

(iii) from about 0.4 up to about 17.0 weight percent on a dry basis of a compound selected from the group consisting of sodium chloride, potassium chloride and calcium chloride; and

(iv) from about 1.75 up to about 3.25 weight percent on a dry basis of monosodium glutamate or monopotassium glutamate or a mixture of same.

More preferably, the composition of our invention consists essentially of the foregoing mixture with the following limitations:

(i) from about 60 weight percent up to about 96 weight percent on a dry basis of a substance selected from the group consisting of (a) $KH_2PO_4$ or (b) $K_2HPO_4$ or (c) a mixture of $Mg_3(PO_4)_2.4H_2O$ and $K_2CO_3$; $K_2CO_3$;

(ii) from about 0.4 up to about 3.5 weight percent on a dry basis of lactic acid;

(iii) from about 0.4 up to about 17.0 weight percent on a dry basis of a compound selected from the group consisting of sodium chloride, potassium chloride and calcium chloride;

(iv) from about 1.75 up to about 3.25 weight percent on a dry basis of monosodium glutamate or monopotassium glutamate or a mixture of same; and in addition

(v) from about 4.0 weight percent up to about 25.0 weight percent of a compound selected from the group consisting of $MgCO_3$, $KHCO_3$ and $NaHCO_3$.

We have discovered that the foregoing composition brings out the bloody, "rare meat" notes in meat flavored foodstuffs, e.g. hamburgers, sausages, steaks and the like. Furthermore, the foregoing composition causes vegetarian meat compositions to have a "rare meat" note thereby causing these vegetarian meat compositions to be more palatable and aesthetically pleasing. We have also discovered that the use of the foregoing compositions enhances the flavor of cheese snack foods and brings out the natural cheese character of the cheese snack foods while requiring a lesser quantity of sodium chloride than that ordinarily required in such cheese snack foods.

According to the present invention 3,5'-nucleotides or their alkali metal salts may be also used in conjunction with the salts but, in all cases, the amount of 5'-nucleotide which is useful is much less than that ordinarily required as in the case of, for example, United States Letters Patent 3,318,710 issued on May 9, 1967.

The foregoing salt composition aids in elimination of the well known "potassium ion after taste" in, for example, barbecue types of tastes and in a number of examples can substantially or even entirely replace sodium salts and/or monosodium glutamate with non-sodium ion and/or non-glutamate ion containing substances.

The mixed seasonings according to the present invention can be used to alter, vary, fortify, modify, enhance or otherwise improve the organoleptic properties, including flavor and/or aroma of a wide variety of materials which are ingested, consumed or otherwise organoleptically sensed by mammalian species including human beings and pets, e.g. cats and dogs.

The term "alter" in its various forms will be understood herein to mean the supplying or imparting of a flavor character or note to an otherwise bland, relatively tasteless substance, or augmenting an existing flavor characteristic where the natural flavor is deficient in some regard, or supplementing the existing flavor or aroma impression to modify the organoleptic character. The materials which are so altered are generally referrerd to herein as consumable materials.

Such mixed seasonings according to the present invention are accordingly useful in flavoring compositions. Flavoring compositions are herein taken to mean those which contribute a part of the overall flavor impression by supplementing or fortifying a natural or artificial flavor in a material, as well as those which supply substantially all the flavor and/or aroma to a consumable article.

Examples of preferred co-flavoring adjuvants with the salts of our invention are:

Methyl thiazole alcohol (4-methyl-5-β-hydroxyethyl thiazole);
2-Methyl butanethiol;
4-Mercapto-2-butanone;
3-Mercapto-4-pentanone;
1-Mercapto-2-propanone;
Benzaldehyde;
Furfural;
Furfuryl alcohol;
2-Mercapto propionic acid;
2-Methylfuran-3-thiol;
2-Methyldihydrofuran-3-thiol;
2-Methyltetrahydrofuran-3-thiol;
2-Ethylfuran-3-thiol;
2-Ethyldihydrofuran-3-thiol;
Methyl pyrazine;
2-Ethyl-3-methyl pyrazine;
Tetramethyl pyrazine;
Dipropyl disulfide;
Methyl benzyl disulfide;
Allyl thiophenes;
2-Butyl thiophene;
2,3-Dimethyl thiophene;

5-Methyl furfural;
Acetyl furan;
2,4-Decadienal;
Guiacol;
Phenyl acetaldehyde;
δ-Decalactone;
d-Limonene;
Acetoin;
Amyl acetate;
Meltol;
Ethyl butyrate;
Levulinie acid;
Piperonal;
Ethyl acetate;
n-Octanal;
n-Pentanal;
n-Hexanal;
Diacetyl;
Sulfur-containing amino acids;
Cysteine;
Hydrolyzed vegetable protein; and
Hydrolyzed fish protein.

The mixed seasonings, or the compositions incorporating them, as mentioned above, can be combined with one or more vehicles or carriers for adding them to the particular product. Vehicles can be edible or otherwise suitable materials such as ethyl alcohol, propylene glycol, water and the like. Carriers include materials such as gum arabic, carrageenan, other gums, and the like. The mixed seasonings according to this invention can be incorporated with the carriers by conventional means such as spray-drying, and the like. Such carriers can also include materials for coacervating the mixed seasonings (and other flavoring ingredients as present) to provide encapsulated products. When the carrier is an emulsion, the flavoring composition can also contain emulsifiers such as mono- and diglycerides of fatty acids and the like. With these carriers or vehicles, the desired physical form of the composition can be prepared.

The quantity of mixed seasonings or mixtures thereof utilized should be sufficient to impart the desired flavor characteristic to the product, but on the other hand, the use of an excessive amount of the derivative is not only wasteful and uneconomical, but in some instances too large a quantity may unbalance the flavor or other organoleptic properties of the product consumed. The quantity used will vary depending upon the ultimate foodstuff, the amount and type of flavor initially present in the foodstuff; the further process or treatment steps to which the foodstuff will be subjected; regional and other preference factors; the type of storage, if any, to which the product will be subjected; and the preconsumption treatment, such as baking, frying and so on, given to the product by the ultimate consumer. Accordingly, the terminology "effective amount" and "sufficient amount" is understood in the context of the present invention to be quantitatively adequate to alter the flavor of the foodstuff.

It is accordingly preferred that the ultimate foodstuff (e.g. snack or soup or the like) compositions contain:

(i) on a dry basis from about 0.5% up to about 25%; and
(ii) on a wet basis from about 0.02% up to about 1.5%.

More specifically, the range in dry soups is from about 2.0% up to about 10% and the range in the aqueous soup ("ready to eat") is from about 0.05% up to about 0.2%.

The amount of mixed seasonings of our invention to be utilized in flavoring compositions can be varied over a wide range depending upon the particular quantity to be added to the foodstuff. Thus, amounts of one or more seasonings according to the present invention of from about 0.5% up to 100% of the total "flavoring" composition can be incorporated in such compositions. Thus, for example, in snack foods, between 30 and 35% of the flavoring coating of the snack food is the seasoning of our invention.

*Brief Description of the Drawings*

Figure 1 is a schematic diagram capable of using alternative and/or sequential and/or simultaneous processes of our invention, which, in turn, use one or more of the mixed seasonings of our invention.

Figure 2 shows a schematic diagram of the apparatus of Figure 1 with an additional schematic representation of the utilization of an electronic program controller (e.g. computer system) system whereby market demand information and the like can be utilized to cause automatic alternations in the manner in which the mixed seasoning of our invention, flavors and food bases are admixed and processed.

*Detailed Description of the Drawings*

Figure 1 sets forth a diagram in schematic form of apparatus used to carry out alternatively and/or in sequential form a process utilizing the mixed seasonings of our invention in combination with processed food bases and other flavorants as set forth supra.

A mixed seasoning as set forth supra at feeding location *10* is fed in the alternative:
(i) through line *14* using conveyor means *17* and variable feed means *18*; and
(ii) through line *37* using conveyor means *38* and variable feed means *39* or through line *13* using conveyor means *15* and variable feed means *16*;
into one of the mixing vessels *43, 22* and/or *26*. Thus the mixed seasoning can be simultaneously conveyed at varying rates into each of tanks *43, 22* and *26* or in the alternative one of tanks *43, 22* or *26* or two of those tanks *43, 22* and/or *26*. Examples of the mixed seasoning are set forth in the examples, infra. Thus, for example, the mixed seasoning *10* could be a mixture of:

| Ingredient | Parts by Weight |
|---|---|
| $KH_2PO_4$ | 72.38 |
| 22% lactic acid | 2.09 |
| 85% glycollic acid | 0.05 |
| $CaHPO_4.H_2O$ | 0.61 |
| NaCl | 3.54 |
| KCl | 0.35 |
| Monosodium glutamate monohydrate | 1.90 |
| $KHCO_3$ | 14.89 |
| $MgCO_3$ | 4.13 |

or a mixture of:

| Ingredient | Parts by Weight |
|---|---|
| $KH_2PO_4$ | 85.94 |
| 22% Lactic acid | 2.48 |
| $CaHPO_4.2H_2O$ | 0.72 |
| KCl | 3.96 |
| $MgCO_3$ | 4.90 |
| Monopotassium glutamate monohydrate | 2.00 |

An example of the flavor in vessel *11* is that set forth in Example XIII of United States Letters Patent 4,098,910 the specification for which is incorporated by reference herein. Thus, an example of the flavor in vessel *11* is one which is prepared as follows:

The following ingredients are refluxed for four hours:

| Ingredients | Parts by Weight |
|---|---|
| L-cysteine hydrochloride | 0.90 |
| Carbohydrate-free vegetable protein hydrolysate | 30.90 |
| Thiamine hydrochloride | 0.90 |
| Water | 67.30 |

The resulting mixture is then aged for three days and an aliquot portion is withdrawn and dried. Based on the weight of the dry solid obtained, sufficient gum arabic is added to the batch to provide a composition containing one part by weight of gum arabic. The composition is then spray-dried.

Ethyl(2-methyl-3-furyl) disulfide is added to the spray-dried material at the rate of 4 ppm.

A food base in vessel *12* may be conveyed in the alternative, in sequence or simultaneously at the same or different rates through lines *34* using conveyance means *33* and conveyance flow rate controller *35*; through line *44* using conveyance means *45* and flow rate controller *46*; through line *58* using

conveyance means 59 and flow control means 60; and/or through line 23 using conveyance means 24 and flow controller 25 into mixing vessel 50 and/or processing vessel 62 and/or mixing vessel 26 and/or mixing vessel 36. An example of such a food base is that which is set forth in United States Letters Patent 4,332,823 issued on June 1, 1982, the specification for which is incorporated by reference herein. Such a food base which would be held in vessel 12 is produced according to Example I at column 5, lines 20—50 of United States Letters Patent 4,332,823.

When food base is passed through line 34 using conveyance means 33 into mixing vessel 36, it is admixed with the flavor material from vessel 11 which is conveyed through line 30 using conveyance means 31. This mixed material is then passed through line 40 using conveyance means 41 and flow control device 42 into mixing vessel 43 where it is mixed, if desired, with the mixed seasoning of our invention being conveyed through line 37 using conveyance means 38 and flow control device 39 into mixing vessel 43. The resulting mixture emanates from mixing vessel 43 after a desired residence time "T" and processed through line 74 using conveyance means 75 and flow control device 76 into processing vessel 77 wherein it is processed and then passed through line 80 into receiving tank 81 where the product is prepared for marketing.

In an alternative or sequentially or simultaneously flavor product 11 being passed through line 19 is admixed with mixed seasoning 10 being passed through line 13 into mixing vessel 22. The resulting mixed seasoning/flavor product may then sequentially or in the alternative be passed through line 55 using conveyance means 56 and flow control device 57 into mixing vessel 61 where it is mixed with processed food base coming from processing tank 62 through line 63 using conveyance device 64 and flow control device 65. Sequentially or in the alternative or simultaneously, the mixed flavor/mixed seasoning of vessels 11 and 10 evolving from mixing tank 22 are passed through line 47 using conveyance device 48 and flow control device 49 into vessel 50 where it is mixed with the food base coming from vessel 12 through line 44 using conveyance device 45 and flow control device 46. Thus, mixed seasoning/flavor/food base composition of matter is then held in mixing vessel 50 for a desired residence time whereupon it is passed through line 70 using conveyance device 71 and flow control device 72 into processing vessel 73 and then through line 82 into vessel 83 whereat it is prepared for marketing.

By the same token the mixed composition of matter evolving out of mixing vessel 61 is passed through line 78 into vessel 79 wherein it is prepared for marketing. In the alternative, sequentially or simultaneously food base from vessel 12 is passed through line 23 using conveyance device 24 and flow control device 25 into mixing vessel 26 where it is mixed with the mixed seasoning of our invention coming from vessel 10 through line 14 using conveyance device 17 and flow control device 18. The mixing vessel 26 mixes the food base and the mixed seasoning and the resulting mixture is held for a desired residence time in mixing vessel 26 whereupon it is passed through line 51 using conveyance device 52 and flow control device 53 into mixing vessel 54 wherein it is mixed with the flavor held in vessel 11 which is passed through line 27 using conveyance device 28 and flow control device 29. The mixing taking place in vessel 54 is carried on for a given residence time whereupon the resulting mixture is passed through line 66 using conveyance device 67 and flow control device 68 into processor 69. After the processing, the resulting mixture is passed through line 84 into holding vessel 85, wherein it is prepared for marketing.

The apparatus of Figure 1 can be used in conjunction with electronic programming controller 100 which uses marketing input information from source 99 via control line 99C feeding into the electronic program controller 100 and controlling the apparatus as illustrated in Figure 1 and Figure 2 via control lines 100 and 100C'. Thus, the apparatus shown in schematic diagram in Figure 1 is also shown in schematic form in Figure 2 as associated with the electronic program controller (computer mechanism) via control lines 100 and 100C'.

More specifically, mixed seasoning held in vessel 10 which may be passed in the alternative, simultaneously or in sequential order through lines 14, 37 and/or 13 respectively may have its flow controlled as a function of marketing input from information source 99 through control line 39C, for example, which controls the flow control device 39; and through control line 16C, for example, which controls flow control device 16 and through control line 18C, for example, which controls flow control device 18. Furthermore, the output of the system ending with holding vessel 79 using information fed through control line 79C is added to the memory system in an electronic program controller 100 whereby such process steps as the processing being carried out in process 77 is controlled through control line 77C; and the processing carried out in process system 73 is controlled through control line 73C.

Furthermore, for example, the amount of flavor substance and food base passing into mixing tank 36 from vessels 11 and 12 respectively, through lines 30 and 34, respectively, is controlled using control line 32C which controls flow control device 32 and control line 35C which controls flow control device 35. The residence time in mixing vessel 36 is controlled at flow control device 42 using control line 42C, for example.

In general, the workings of the apparatus as set forth in Figures 1 and 2 in sequential, simultaneous or alternative order is controlled using flow control devices such as 39, 21, 32, 25 and 53 by means of control lines 16C, 21C, 32C, 35C and 53C, respectively.

Examples I—VII

The following table sets forth mixtures of salts (with each salt given as a weight percentage) to produce

the mixed seasonings of our invention. Each mixture is given as a separate example. Each of the mixtures of each of the examples will be used in examples following XVI.

TABLE I

| Ingredient | EXAMPLE I | II | III | IV | V | VI | VII |
|---|---|---|---|---|---|---|---|
| $KH_2PO_4$ | — | 72.38 | 73.12 | 72.42 | 75.62 | — | — |
| Lactic acid 22% | 3.09 | 2.09 | 2.11 | 2.09 | 2.18 | 3.0 | 2.29 |
| Glycolic Acid 85% | 0.08 | 0.05 | — | — | — | — | — |
| $Mg_3(PO_4)_2.4H_2O$ | 10.90 | — | — | — | — | — | — |
| $CaHPO_4.2H_2O$ | 0.90 | 0.61 | — | 0.61 | 0.50 | 0.70 | — |
| NaCl | 5.24 | 3.54 | 3.58 | 3.54 | 3.70 | 5.10 | 15.22 |
| KCl | 0.52 | 0.35 | — | 0.35 | 0.38 | 0.50 | 0.38 |
| Monosodium Glutamate.$H_2O$ | 2.90 | 1.96 | 1.98 | 1.96 | 2.06 | 2.82 | 2.15 |
| $NaHCO_3$ | 22.02 | — | 15.04 | 14.90 | 15.56 | 21.38 | — |
| $KHCO_3$ | — | 14.89 | — | — | — | — | — |
| $K_2CO_3$ | 54.35 | — | — | — | — | — | — |
| $MgCO_3$ | — | 4.13 | 4.17 | 4.13 | — | — | — |
| $K_2HPO_4$ | — | — | — | — | — | 66.50 | 79.24 |
| Calcium chloride | — | — | — | — | — | — | 0.72 |

Examples VIII—XVI

The following Table II sets forth mixtures of non-sodium-containing salts to produce mixed seasonings of our invention. Each mixture is given as a separate example. Each of the mixtures of each of the examples will be used in examples following the instant examples VII—XVI.

TABLE II

| Ingredient | EXAMPLE VIII | IX | X | XI | XII | XIII | XIV | XV | XVI |
|---|---|---|---|---|---|---|---|---|---|
| $KH_2PO_4$ | 90.98 | 85.94 | 89.16 | 94.06 | 86.61 | 92.18 | 95.90 | 79.24 | 93.84 |
| Lactic Acid 22% | 2.62 | 2.48 | 2.57 | 4.24 | 3.91 | 4.16 | 2.77 | 2.29 | 2.71 |
| $CaHPO_4.2H_2O$ | 0.77 | 0.72 | 0.75 | 0.99 | 0.91 | 0.97 | — | — | — |
| $CaCl_2$ | — | — | 0.43 | — | — | — | 0.87 | 0.72 | 0.85 |
| KCl | 0.44 | 3.96 | — | 0.71 | 5.75 | 0.69 | 0.46 | 15.00 | 0.45 |
| $MgCO_3$ | 5.19 | 4.90 | 5.08 | — | — | — | — | — | — |
| Monopotassium Glutamate.$H_2O$ | — | 2.00 | 2.00 | — | 2.82 | 2.00 | — | 2.15 | 2.15 |

The foregoing examples, shown in mole percents of anions, cations and substantially nonionic acids (e.g. lactic acid) are set forth in terms of such ions and free acids in Table III below.

TABLE III

| Ingredient | EXAMPLE VIII | IX | X | XI | XII | XIII | XIV | XV | XVI |
|---|---|---|---|---|---|---|---|---|---|
| $K^+$ | 45.3 | 45.6 | 45.5 | 49.30 | 49.3 | 49.3 | 49.0 | 49.2 | 49.0 |
| $H_2PO_4^-$ | 45.0 | 41.6 | 44.4 | 48.60 | 43.2 | 47.9 | 48.6 | 35.7 | 47.8 |
| $HPO_4^=$ | 0.3 | 0.276 | 0.297 | 0.402 | 0.359 | 0.399 | — | — | — |
| $Ca^{++}$ | 0.3 | 0.277 | 0.297 | 0.722 | 0.359 | 0.399 | 0.545 | 0.401 | 0.515 |
| $Cl^-$ | 0.398 | 3.5 | 0.392 | 0.662 | 5.25 | 0.658 | 1.51 | 13.61 | 1.49 |
| $Mg^{++}$ | 4.15 | 3.84 | 4.11 | — | — | — | — | — | — |
| $CO_3^=$ | 4.15 | 3.84 | 4.11 | — | — | — | — | — | — |
| Lactic acid | 0.434 | 0.396 | 0.425 | 0.700 | 0.646 | 0.694 | 0.465 | 0.342 | 0.458 |
| Glutamate ion | — | 0.65 | 0.668 | — | 0.942 | 0.696 | — | 0.650 | 0.735 |

Table IV below sets forth the mole ratio of metal cation (e.g. potassium ion, calcium ion and magnesium ion) to total moles of anion, cation and free acid, e.g. lactic acid.

TABLE IV

| Ingredient | EXAMPLE VIII | IX | X | XI | XII | XIII | XIV | XV | XVI |
|---|---|---|---|---|---|---|---|---|---|
| Mole ratio of metal cation: anion+cation +free acids | 0.498 | 0.499 | 0.498 | 0.497 | 0.497 | 0.496 | 0.495 | 0.496 | 0.496 |

The mixed seasonings of Examples I—XVI are used in the following Examples XVII, et seq.

Example XVII

The following ingredients are refluxed for four hours:

| Ingredient | Parts by Weight |
|---|---|
| L-cysteine hydrochloride | 0.9 |
| Carbohydrate-free vegetable protein hydrolysate | 30.9 |
| Thiamine hydrochloride | 0.9 |
| Water | 67.3 |

The resulting mixture is then aged for three days and an aliquot portion is withdrawn and dried. Based on the weight of the dry solid obtained, sufficient gum arabic is added to the batch to provide a composition containing an equal amount of gum arabic. The composition is then spray-dried.

Ethyl(2-methyl-3-furyl)disulfide is added to the spray-dried material at the rate of 4 ppm.

The resulting material has a beef liver flavor. To this material is added, in separate portions, one of the mixed seasonings selected from Examples I—XVI at levels of 4%, 8%, 12%, 15% and 25%.

Each of the resulting material has an excellent "rare" beef liver flavor which can be added to "well done" cooked liver in the form of gravies causing the "well done" cooked liver to have a rare flavor nuance.

Example XVIII

A beef liver gravy is made by formulating a composition in the amounts indicated:

| Ingredient | Parts by Weight |
|---|---|
| Cornstarch | 10.50 |
| One of the products of Example XVII | 3.00 |
| Caramel color | 0.30 |
| Garlic powder | 0.05 |
| White pepper | 0.05 |
| Sodium chloride | 1.90 |
| Monosodium glutamate | 0.20 |

To one unit of gravy flavor concentrate, six ounces of water is added and the mixture is stirred thoroughly to disperse the ingredients, brought to a boil, simmered for one minute, and served. This "meatless" gravy exhibits an excellent rare beef liver flavor.

Example XIX

Seven ppm of ethyl (2-methyl-3-furyl) disulfide is added to beef broth prepared from 100 gms of a commercial dried mixture 250 ml hot water. To the resulting material is added at a level of 0.1% each of the mixed seasonings of Examples I—XVI. The ethyl (2-methyl-3-furyl) disulfide increases the beef liver character and imparts a pleasant nutty note. The mixed seasonings cause the overall beef broth to have a "rare liver" nuance. The resultant beef broth has an excellent improved, more blended meaty/rare flavor than does the unflavored beef broth.

Example XX

The following ground sausage mixture is prepared:

| Ingredient | Parts by Weight |
|---|---|
| Ground beef | 200 |
| Beef suet | 120 |
| Ice | 200 |
| Potato flour | 100 |
| Anhydrous bread crumbs | 140 |
| Dry milk powder | 20 |
| Standard spice flavor | 10 |
| containing | |
| Oil of cumin | 1.6 |
| Oil of mustard | 3.3 |
| Oil of celery | 3.3 |
| Oil of ginger | 5.2 |
| Oil of cloves | 14.3 |
| Oil of coriander | 17.6 |
| Oil of pimenta berries | 22.0 |
| Oil of black pepper | 43.0 |
| Oleoresin capsicum | 373.0 |
| Oil of nutmeg | 500.0 |

To the above mixture 0.02% by weight of the following mixture is added:

| Ingredient | Parts by Weight |
|---|---|
| n-Propyl (2-methyl-3-furyl) disulfide | 5 |
| Ethyl alcohol (95%) | 95 |

To the resulting mixture is added separately, one of the mixed seasonings selected from the Examples I—XVI, at the rate of 7%.

The resulting mixtures are then formed into sausages and encased in the usual manner. The encased sausages are heated in water at a temperature of 160—180°F for a period of two hours. Each of the sausages has a rare liver taste reminiscent of the taste of sausage made with natural liver and also containing the rare desirable bloody notes.

Example XXI

A mixture of 8.8 grams of cysteine-hydrochloride, 8.8 grams of thiamine hydrochloride and 309.4 grams of carbohydrate-free vegetable protein hydrolysate (Nestle 4BE) is brought to a standard weight of 1000 grams by addition of water and adjusted to a pH of 4.75 with acid or base as required. This mixture is then boiled under reflux conditions at atmospheric pressure for four hours.

After the mixture is allowed to cool, one gram of isoamyl (2-methyl-3-furyl) disulfide and 0.25 grams of one of the mixed seasonings prepared according to Examples I—XVI is added thereto. The resulting

mixture thus obtained has an excellent unique roasted, rare bloody liver meaty flavors with chicken meat nuances.

Example XXII

The following ingredients are refluxed for four hours:

| Ingredient | Parts by Weight |
|---|---|
| L-Cysteine hydrochloride | 0.9 |
| Carbohydrate-free vegetable protein hydrolysate | 30.9 |
| Thiamine hydrochloride | 0.9 |
| One of the mixed seasonings of one of Examples I—XVI | 7.8 |
| Water | 67.3 |

The resulting mixture is then aged for three days and an aliquot portion is withdrawn and dried. Based on the weight of the dry solid obtained, sufficient gum arabic is added to the batch to provide a composition containing one part by weight of gum arabic. The composition is then spray-dried.

n-Heptyl (2-methyl-3-furyl) disulfide is added to the spray-dried material at the rate of 4 ppm.

The resulting material has an excellent rare roast beef flavor.

Example XXIII

A roast beef gravy is made by formulating a composition in the amounts indicated:

| Ingredients | Parts by Weight |
|---|---|
| Cornstarch | 10.50 |
| One of the final products of Example XXII | 3.00 |
| Caramel color | 0.30 |
| Garlic powder | 0.05 |
| White pepper | 0.05 |

To one unit of gravy flavor concentrate, 0.2 parts by weight of one of the mixed seasonings of Example I—XVI is added and eight ounces of water is added. The mixture is stirred thoroughly to disburse the ingredients, brought to a boil, simmered for one minute, and served. This "meatless" gravy exhibits an excellent rare roast beef flavor.

Example XXIV(A)

*Cheese flavor*

Skim milk having 22% total solids was heated to 145°F for 30 minutes to substantially destroy any pathogens and to reduce the number of competitive organisms. The skim milk was then cooled to 92°F and placed in a sterile fermentor having one-fifth of its volume as a head space. The fermenter was maintained at 92°F. The skim milk was inoculated with approximately 3,000 organisms per gram of the medium of the organism *S.lactis-variation diacetilactis* (citrate fermenter) and approximately 3,000 organisms per gram of the medium of the organism *S.lactis-variation diacetilactis* (citrate non-fermenter). The skim milk was also inoculated with approximately 2,000 organisms per gram of aqueous medium of *B.megatherium*. The inoculated skim milk was maintained at 92°F for five days during which the organisms therein proliferated.

Example XXIV(B)

*Production of the Cheese Flavor*

Skim milk having 15% total solids was heated to 145°F for 30 minutes to substantially destroy pathogens and to reduce the number of competitive organisms. The skim milk was cooled to 92°F and placed in a fermenter maintained at 92°F. The skim milk was then inoculated with the product of Example

XXIV(a) wherein the resulting inoculated skim milk had a total of approximately 10,000 organisms per gram of skim milk and a ratio of the Bacillus organisms to the Streptococcus organisms was approximately 60/40. The inoculated skim milk was stirred for 35 minutes to disperse the organisms therein. The inoculated skim milk was then sealed in an airtight manner in the fermenter and 1/5 of the volume of the fermenter remained as a head space. Fermentation was carried out at 95°F for three days. Thereafter, the fermenter was opened under a blanket of nitrogen and cut particles of naturally produced cheddar cheese was placed in the fermentation medium. The amount of cheese added, on a solid basis of the fermentation medium and cheese added, was approximately 33% by weight. The fermenter was closed and stirring was carried out until the cheese was suspended. The stirring time was about 1½ hours. Fermentation was then allowed to resume for an additional one day. The mixture of cheese and fermentation produced was pasteurized at 145°F for 30 minutes and then spray dried in a conventional manner to a fine powder having a complete cheddar cheese taste and taste feel.

Examle XXIV(C)

On a dry basis was mixed 50% solids of Examples XXIV(B) 31.3% acid whey powder, 4% mixed seasonings (individually of one of the Examples I—XVI, 0.5% USDA Yellow No. 5, the remainder being dry milk solids. After thorough mixing a portion thereof was dispersed with vigorous stirring in water and spray dried to form a cheese flavored powder. The cheese powder was a fine textured powder having a very distinctive and medium degree of improved natural-like cheddar cheese flavor.

Example XXIV(D)

A second portion of the product of Example XXIV(C) was mixed with an equal portion of weight of milk solids and produced a cheddar cheese spread of mild cheese flavor.

Example XXIV(E)

A third portion of the product of Example XXIV(C) was mixed with an equal portion of vegetable fats and produced a mild cheddar cheese dip.

Example XXIV(F)

Equal portions of the product of Example XXIV(C) and whey solids were mixed to produce a medium to mild cheese flavored powder for sprinkling on salads and the like.

Example XXIV(G)

On a dry weight basis, there was mixed 50% of the fermented solids of Example XXIV(B), 22.5% acid whey powder, 12.5% butter fat, 0.5% Atmos 150®, 4% of one of the mixed seasonings of Examples I—XVI, 0.5% USDA Yellow No. 5. This product after being thoroughly mixed was cut into wedges and produced an excellent natural-like cheddar cheese flavor product.

Example XXV

*Dry Soup Mix*

The following dry soup mix is prepared:

| Ingredients | Parts by Weight |
|---|---|
| Chopped chicken fat | 3.0 |
| Ground chicken meat | 4.0 |
| Mixed seasoning of one of Examples I—XVI | 8.0 |
| Dextrose | 3.0 |
| Onion powder | 0.7 |
| Enzymatically hydrolyzed yeast | 0.5 |
| Turmeric | 0.118 |
| Parsley | 0.04 |
| Sage | 0.01 |
| Noodles | 32.0 |

The mixture is then simmered in 800 cc of water for 7 minutes, and soup having a seasoned chicken flavor results and even more improved chicken flavor results when chicken fat employed is first mixed with 0.18 cc of ethanol containing 10% by weight of arachidonic acid.

Example XXVI

Two chicken flavors are prepared by refluxing the following ingredients at about 95°C for 2 hours:

| Ingredients | Parts by Weight | |
|---|---|---|
| | A | B |
| Corn gluten hydrolysate | 37.92 | 45.17 |
| Xylose | 0.19 | 0.50 |
| Thiamine HCl | 1.14 | 1.50 |
| Nucleotides* | 0.75 | — |
| Mixed seasonings of Example IV | 0.35 | 0.42 |
| Water | 60.00 | 52.00 |

*50/50 mixture of sodium inosinate and sodium quanylate.

After drying, 16.31 parts of autolysed yeast extract are added to formula A. The product of formula B is dry blended with 19.43 parts of autolysed yeast and 0.83 parts of nucleotides. Both products have a very pleasant seasoned chicken flavor.

Example XXVII

*Bologna Sausage*

Beef and pork were separately treated and left to stand for 2 days to be impregnated with one of the mixed seasonings of Examples I—XVI added thereto. Then they were removed and ground by separate meat choppers. Lean meat from each ground meat sample was put together and treated by a cutter. To the mixed meat being cut was added the mixed seasoning of Example III in one sample lot and the mixed seasoning of Example IX in the other sample lot in an amount of 0.7% based on the total weight of the meat used. Then the resultant meat paste, after addition thereto of fat, was forced into a tubular case with the aid of a stuffer. The case was bound at intervals of 25 cms. Finally, the case was dried at 40°C for 1 hour, smoked at 65°C for 3 hours, heated in water at 75°C for 1.5 hours and cooled to provide a bologna sausage. The resulting bologna sausage had excellent seasoned meat flavor, highly superior to bologna sausages known in the prior art.

Example XXVIII(A)

To 614 grams of 4-hydroxy-2,5-dimethyl-2,3-dihydrofuran-3-one in a buffer solution containing about 35 grams potassium acetate, about 14 grams of acetic acid and 400 ml of water (pH 5.0), a solution of 12 grams of sodium sulphide ($K_2S.9H_2O$) in 200 ml of water was added over a period of 30 minutes. The mixture was then boiled under reflux conditions at atmospheric pressure for 2 hours and allowed to cool. The pH was then 6.6.

Example XXVIII(B)

A gravy was prepared from the following ingredients:

| Ingredients | Grams |
|---|---|
| Potato starch | 15.00 |
| Onion powder | 2.50 |
| Beef tallow | 20.00 |
| Flour | 15.00 |
| Caramel | 1.60 |
| Pepper | 0.02 |
| Bay leaves | 0.02 |
| Clove | 0.02 |
| One of the mixed seasonings of Examples I—XVI | 8.00 |
| Protein hydrolysate | 4.00 |
| Beef extract powder | 2.00 |
| Tomato powder | 1.00 |
| | 69.16 |

The potato starch and flour were added to the molten beef tallow at 60°C under continuous stirring. The other ingredients were well blended and likewise added to the beef tallow. The whole mixture was boiled in 1 liter of water.

The gravy so obtained was divided into two portions of 500 ml. In the first portion 250 mg of maltodextrin was dissolved; in the second portion 250 ml of the flavor prepared according to Example XXVIII(A) was dissolved. Both gravies were assessed in a paired comparison test by a panel consisting of 12 persons.

The gravy containing the flavor powder was preferred by 10 out of the 12 tasters because of its more pronounced fried meat flavor with an excellent bloody note.

Example XXIX

The following ingredients were introduced into a cooking vessel and heated to popping temperature:

| Ingredient | |
|---|---|
| Encapsulated Bleu Cheese flavor | 3.6 grams |
| Soybean oil | 55 cc |
| Popcorn | 80.0 grams |
| The mixed seasoning of Example III | 4.0 grams |

The resulting popcorn had a decided bleu cheese flavor which was excellently seasoned which was uniformly distributed and did not lose potency of the flavor or the seasoning after several days.

**Claims**

1. A mixed seasoning composition of matter consisting essentially of:

(a) from about 0.25 up to about 0.80 mole percent on a dry basis of a lactic acid/lactate species mixture having the structures:

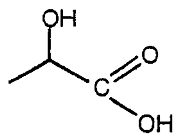
or
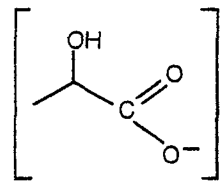

(b) from 0 up to about 0.09 mole percent on a dry basis of glycollic acid/glycollic ion species mixture having the structure:

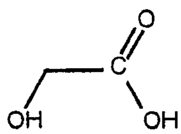
or
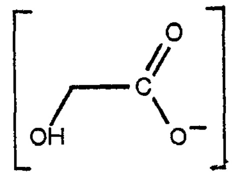

(c) from 0 up to about 10.0 mole percent on a dry basis of magnesium ion;

(d) from about 6 mole percent up to about 50 mole percent on a dry basis of a phosphate/monoacid phosphate/diacid phosphate/phosphoric acid species mixture having the formula:

$[PO_4^{\equiv}]$ or $[HPO_4^{=}]$ or $[H_2PO_4^{-}]$ or $H_3PO_4$

taken alone or taken further together with at least one of the species tripolyphosphate, pyrophosphate and/or polymetaphosphate;

(e) from 0 mole percent up to about 40 mole percent on a dry basis of sodium ion;

(f) from about 8 mole percent up to about 50 mole percent on dry basis of potassium ion;

(g) from about 0.3 mole percent up to about 16 mole percent on a dry basis of chloride ion;

(h) from 0 mole percent up to 30 mole percent on a dry basis of carbonate/bicarbonate/carbonic acid species mixture having the formula:

$[CO_3^{=}]$ or $[HCO_3^{-}]$ or $H_2CO_3$

(j) from 0 mole percent up to about 2.0 mole percent on a dry basis of monobasic glutamate/dibasic glutamate/glutamic acid species mixture having the formulae:

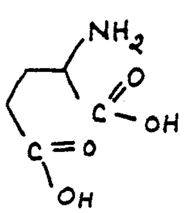
or
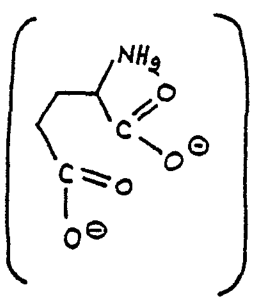
or
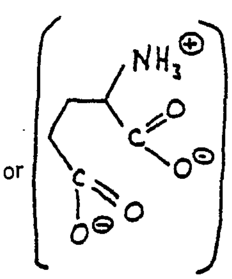
or
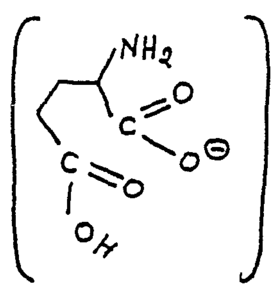
or
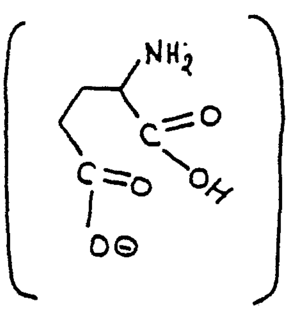
or
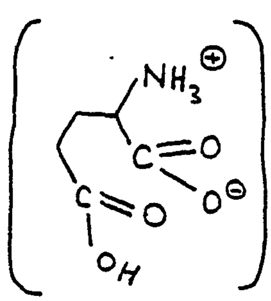
or
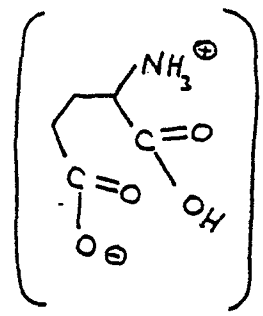
or
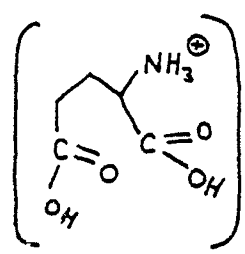

(k) from 0 up to about 0.6 mole percent on a dry basis of calcium ion;
with the proviso that the sum total of mole percent on a dry basis of sodium ion, potassium ion, magnesium ion and calcium ion is from about 48 mole percent up to about 60 mole percent; and with the proviso that the sum total of carbonate/bicarbonate/carbonic acid ion species mixture having the formula:

$[CO_3^{=}]$ or $[HCO_3^{-}]$ or $H_2CO_3$

taken together with the sum total mole percent on a dry basis of the phosphate/monobasic phosphate/dibasic phosphate/phosphoric acid mixture having the formula:

$[PO_4^{\equiv}]$ or $[HPO_4^{=}]$ or $[H_2PO_4^{-}]$ or $H_3PO_4$

taken alone or taken further together with at least one of the species tripolyphosphate, pyrophosphate and/or polymetaphosphate is from about 35 mole percent up to about 50 mole percent; the term "mole percent" being based upon the total moles of cations, anions and free organic acid which is substantially non-ionized in the composition.

2. The composition of matter of Claim 1 which comprises a mixture of (i) from about 60 weight percent up to about 96 weight percent on a dry basis of a substance which is in the alternative one of (a) $KH_2PO_4$; (b) $K_2HPO_4$ and (c) a mixture of $Mg_3(PO_4)_2.4H_2O$ and $K_2CO_3$; (ii) from about 0.4 up to about 3.5 weight percent on a dry basis of lactic acid; (iii) from about 0.4 up to about 17.0 weight percent on a dry basis of a compound which is in the alternative one of sodium chloride, potassium chloride and calcium chloride; and (iv) from about 1.75 up to about 3.25 weight percent on a dry basis of a glutamate salt which is in the alternative one of monosodium glutamate and monopotassium glutamate.

3. The composition of matter of Claim 2 containing in addition (v) from about 4.0 weight percent up to about 25.0 weight percent of a compound which is in the alternative one of $MgCO_3$, $KHCO_3$ and $NaHCO_3$.

4. The composition of Claim 1 having added thereto a flavoring formulation in the alternative cheese flavoring formulations, meat flavoring formulations, savory flavoring formulations and dairy flavoring formulations.

5. A process for augmenting or enhancing the aroma or taste of a foodstuff comprising the step of adding to said foodstuff an aroma or tests augmenting or enhancing quantity of at least one composition defined according to Claim 1.

**Patentansprüche**

1. Stoffmischung zum Würzen, im wesentlichen gekennzeichnet durch:

(a) von etwa 0,25 bis etwa 0,80 Mol-Prozent auf Trockenbasis einer Milchsäure/Laktat-Mischung mit den Strukturen:

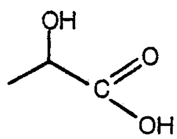

oder

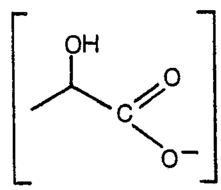

(b) von 0 bis etwa 0,09 Mol-Prozent auf Trockenbasis Glycolsäure/Glycolation-Mischung mit der Struktur:

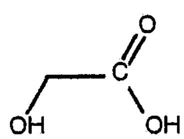

oder

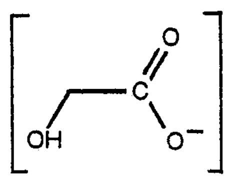

(c) von 0 bis etwa 10,0 Mol-Prozent auf Trockenbasis Magnesiumion;

(d) von etwa 6 Mol-Prozent bis etwa 50 Mol-Prozent auf Trockenbasis einer Phosphat/Monohydrogenphosphat/Dihydrogenpohosphat/Phosphorsäure-Mischung mit der Formel:

$[PO_4^{\equiv}]$ oder $[HPO_4^{=}]$ oder $[H_2PO_4^{-}]$ oder $H_3PO_4$

allein oder zusammen mit wenigstens einer von den Sorten Tripolyphosphat, Pyrophosphat und/oder Polymetaphosphat;

(e) von 0 Mol-Prozent bis etwa 40 Mol-Prozent auf Trockenbasis Natriumion;

(f) von etwa 8 Mol-Prozent bis etwa 50 Mol-Prozent auf Trockenbasis Kaliumion;

(g) von etwa 0,3 Mol-Prozent bis etwa 16 Mol-Prozent auf Trockenbasis Chloridion;

(h) von 0 Mol-Prozent bis 30 Mol-Prozent auf Trockenbasis Carbonat/Bicarbonat/Kohlensäure-Mischung mit der Formel:

$[CO_3^{=}]$ oder $[HCO_3^{-}]$ oder $H_2CO_3$

(j) von 0 Mol-Prozent bis etwa 2,0 Mol-Prozent auf Trockenbasis einbasiges Glutamat/zweibasiges Glutamat/Glutaminsäure-Mischung mit den Formeln:

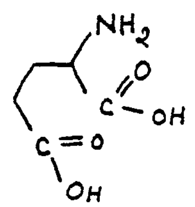 oder 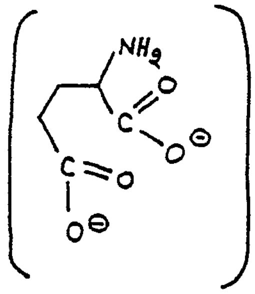 oder 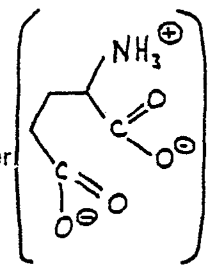 oder 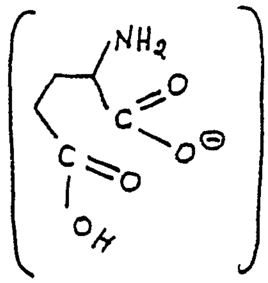 or

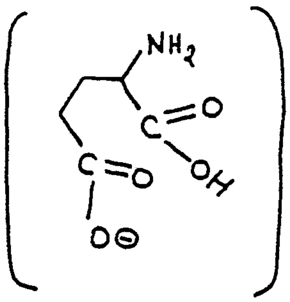 oder 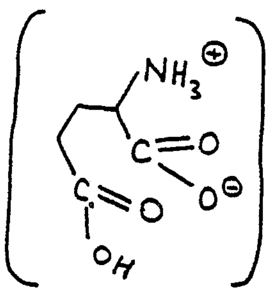 oder 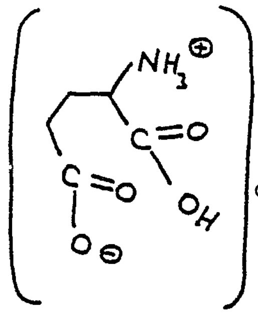 oder 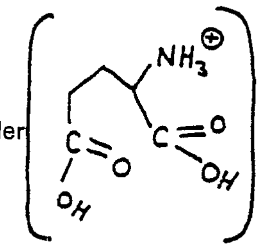

(k) von 0 bis etwa 0,6 Mol-Prozent auf Trockenbasis Calciumion; mit dem Vorbehalt, daß die Gesamtsumme an Mol-Prozent auf Trockenbasis des Natriumions, Kaliumions, Magnesiumions und Calciumions von etwa 48 Mol-Prozent bis etwa 60 Mol-Prozent beträgt; und mit dem Vorbehalt, daß die Gesamtsumme der Carbonat/Bicarbonat/Kohlensäure-lonensortenmischung mit der Formel:

$[CO_3^{=}]$ oder $[HCO_3^{-}]$ oder $H_2CO_3$

zusammen mit der Gesamtsumme von Mol-Prozent auf Trockenbasis der Phosphat/Monohydrogenphosphat/Dihydrogenphosphat/Phosphorsäure-Mischung mit der Formel:

$[PO_4^{\equiv}]$ oder $[HPO_4^{=}]$ oder $[H_2PO_4^{-}]$ oder $H_3PO_4$

allein oder zusammen mit wenigstens einer der Sorten Tripolyphosphat, Pyrophosphat und/oder Polymetaphosphat, von etwa 35 Mol-Prozent bis etwa 50 Mol-Prozent beträgt; wobei der Begriff "Mol-Prozent" auf den Gesamtmolenkationen, Anionen und freie organische Säuren die im wesentlichen in der Zusammensetzung nicht-ionisiert sind, basiert.

2. Stoffmischung nach Anspruch 1, gekennzeichnet durch eine Mischung von (i) von etwa 60 Gewichtsprozenten bis etwa 96 Gewichtsprozenten auf Trockenbasis einer Substanz, die alternativ eine der folgenden ist: (a) $KH_2PO_4$; (b) $K_2HPO_4$ und (c) eine Mischung von $Mg_3(PO_4)_2.4H_2O$ und $K_2CO_3$; (ii) von etwa 0,4 bis etwa 3,5 Gewichtsprozente auf Trockenbasis Milchsäure; (iii) von etwa 0,4 bis 17,0 Gewichtsprozente auf Trockenbasis einer Verbindung, die alternativ eine der folgenden ist: Natriumchlorid, Kaliumchlorid und Calciumchlorid; und (iv) von etwa 1,75 bis etwa 3,25 Gewichtsprozente auf Trockenbasis eines Glutamatsalzes, das alternativ eines der folgenden ist: Mononatriumglutamat und Monokaliumglutamat.

3. Stoffmischung nach Anspruch 2, gekennzeichnet durch einen zusätzlichen Gehalt an (v) von etwa 4,0 Gewichtsprozent bis etwa 25,0 Gewichtsprozent einer Verbindung, die alternativ eine der folgenden ist: $MgCO_3$, $KHCO_3$ und $NaHCO_3$.

4. Würzmischung nach Anspruch 1, dadurch gekennzeichnet, daß hier eine Aromatisierformulierung hinzugefüht worden ist, die alternativ Käsearomatisierungsformulierungen, Fleischaromatisierungsformulierungen, pikante Aromatisierungsformulierungen und Milchproduktaromatisierungsformulierungen umfaßt.

5. Verfahren zum Vergrößern oder Steigern des Aromas oder Geschmacks eines Nahrungsmittels, dadurch gekennzeichnet, daß besagtem Nahrungsmittel eine aroma- oder geschmacks-vergrößernde oder -steigernde Menge von wenigstens einer Zusammensetzung gemäß Anspruch 1 hinzugefügt wird.

**Revendications**

1. Composition de matière d'assaisonnement mélangée consistant essentiellement en:

(a) d'environ 0,25 à environ 0,80% molaire sur la base du poids sec d'un mélange d'espèces acide lactique/lactate de structures:

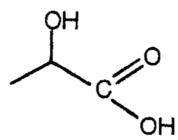 ou 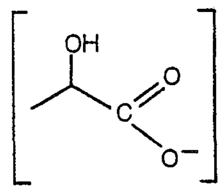

(b) de 0 à environ 0,09% molaire sur la base du poids sec d'un mélange d'espèces acide glycolique/ion glycolate de structure:

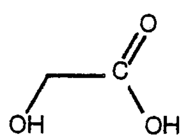 ou 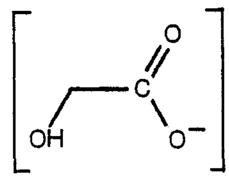

(c) de 0 à environ 10,0% molaire sur la base du poids sec d'ion magnésium;

(d) d'environ 6% molaire à environ 50% molaire sur la base du poids sec d'un mélange d'espèces phosphate/phosphate monoacide/phosphate diacide/acide phosphorique de formule:

$[PO_4^{\equiv}]$ ou $[HPO_4^{=}]$ ou $[H_2PO_4^{-}]$ ou $H_3PO_4$

pris seul ou encore pris avec au moins une des espèces tripolyphosphate, pyrophosphate et/ou polymètaphosphate;

(e) de 0% molaire jusqu'à environ 40% molaire sur la base du poids sec d'ion sodium;

(f) d'environ 8% molaire jusqu'à environ 50% molaire sur la base du poids sec d'ion potassium;

(g) d'environ 0,3% molaire jusqu'à environ 16% molaire sur la base du poids sec d'ion chlorure;

(h) de 0% molaire jusqu'à 30% molaire sur la base du poids sec d'un mélange d'espèces carbonate/bicarbonate/acide carbonique de formule:

$[CO_3^{=}]$ ou $[HCO_3^{-}]$ ou $H_2CO_3$

(j) de 0% molaire jusqu'à environ 2,0% molaire sur la base du poids sec d'un mélange d'espèces glutamate monobasique/glutamate dibasique/acide glutamique de formules:

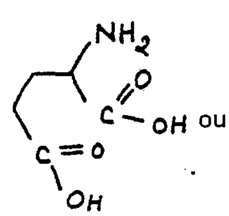 ou 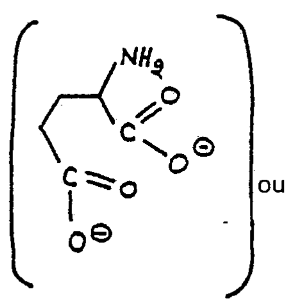 ou 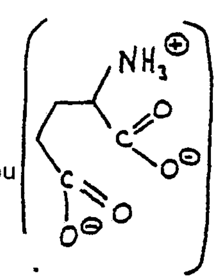 ou 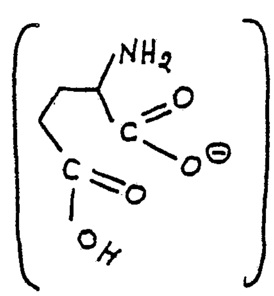 ou

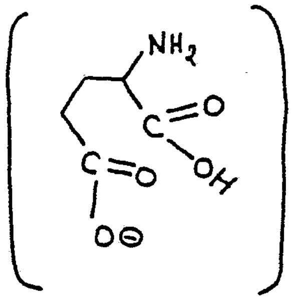 ou 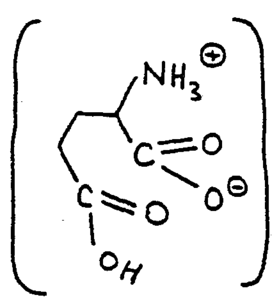 ou 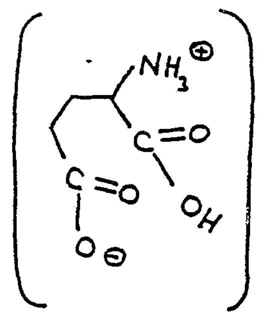 ou 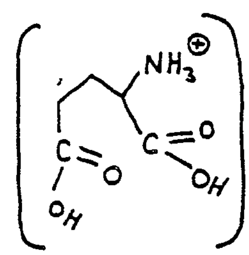

(k) de 0 à environ 0,6% molaire sur la base du poids sec d'ion calcium;
avec la précision que le total des pourcentages molaires sur la base du poids sec de l'ion sodium, de l'ion potassium, de l'ion magnésium et de l'ion calcium est d'environ 48% molaire à environ 60% molaire; et avec la précision que le total du mélange d'espèces carbonate/bicarbonate/acide carbonique de formule:

$$[CO_3^{=}] \text{ ou } [HCO_3^{-}] \text{ ou } H_2CO_3$$

pris ensemble avec le total du pourcentage molaire sur la base du poids sec du mélange phosphate/phosphate monobasique/phosphate dibasique/acide phosphorique de formule:

$$[PO_4^{\equiv}] \text{ ou } [HPO_4^{=}] \text{ ou } [H_2PO_4^{-}] \text{ ou } H_3PO_4$$

pris ensemble ou encore pris avec au moins l'une des espèces tripolyphosphate, pyrophosphate et/ou polymétaphosphate est d'environ 35% molaire jusqu'à environ 50% molaire; le terme "pourcentage molaire" étant basé sur le nombre total de moles de cations, d'anions et d'acide organique libre qui est essentiellement non ionisé dans la composition.

2. Composition de matière de la revendication 1 qui comprend un mélange de (i) d'environ 60% en poids jusqu'à environ 96% en poids sur la base du poids sec d'une substance qui est l'une des suivantes (a) $KH_2PO_4$; (b) $K_2HPO_4$ et (c) un mélange de $Mg_3(PO_4)_2.4H_2O$ et $K_2CO_3$; (ii) d'environ 0,4 à environ 3,5% en poids sur une base sèche d'acide lactique; (iii) d'environ 0,4 à environ 17,0% en poids sur une base sèche d'un composé qui est l'un des suivants: chlorure de sodium, chlorure de potassium et chlorure de calcium; et (iv) d'environ 1,75 à environ 3,25% en poids sur une base sèche d'un sel de glutamate qui est soit le glutamate monosodique, soit le glutamate monopotassique.

3. Composition de matière de la revendication 2 contenant en outre (v) d'environ 4,0% en poids à environ 25,0% en poids d'un composé qui est l'un des suivants: $MgCO_3$, $KHCO_3$ et $NaHCO_3$.

4. Composition de la revendication à laquelle est ajoutée une formulation de sapidité choisie parmi des formulations à goût de fromage, des formulations à goût de viande, des formulations à goût d'herbes aromatiques et des formulations à goût de produits laitiers.

5. Procédé pour augmenter ou accroître l'arôme ou le goût d'un aliment comprenant l'étape d'addition audit aliment d'une quantité augmentant ou accroissant l'arôme ou le goût d'au moins une composition définie selon la revendication 1.

FIG.1

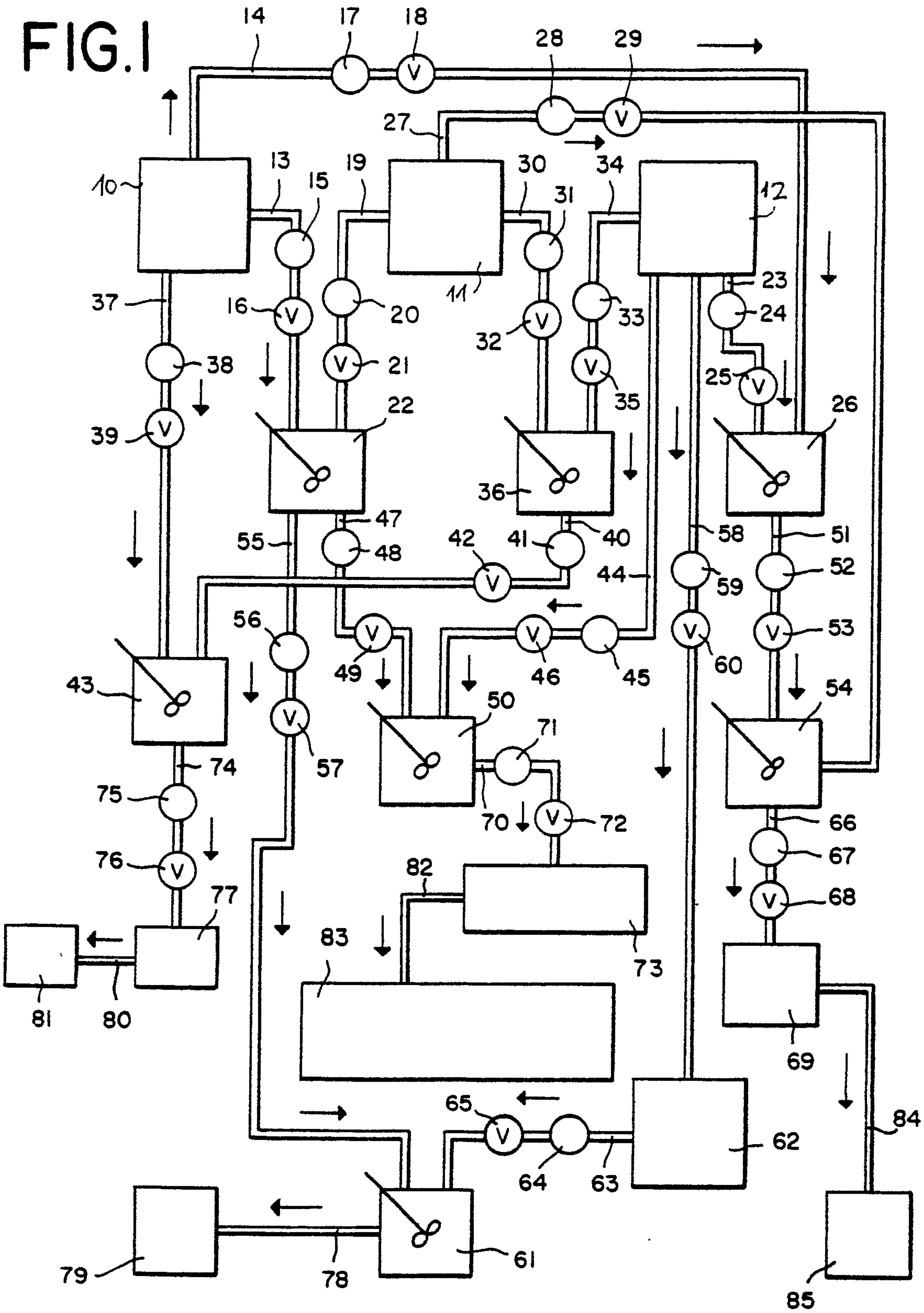

14
17
18
28
29
27
10
13
15
19
30
31
34
12
11
37
16
20
32
33
23
24
38
21
35
25
39
22
26
36
47
51
55
48
42
41
40
58
52
44
59
56
49
46
45
60
53
43
50
71
54
74
57
75
70
72
66
67
76
82
68
77
83
73
81
80
69
65
84
64
63
62
79
78
61
85

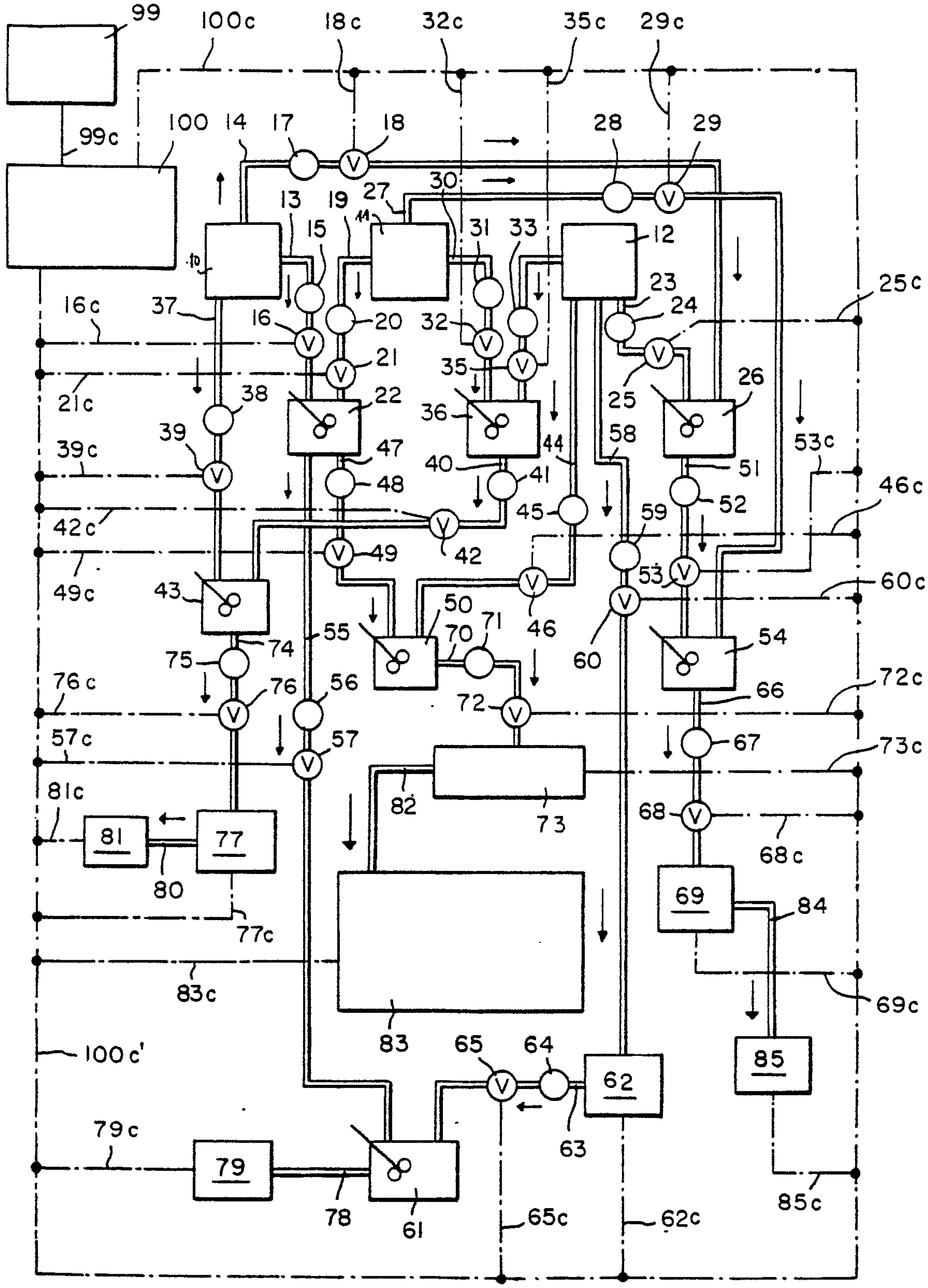

FIG.2